# EUROPEAN PATENT SPECIFICATION

(11) **EP 2 467 975 B1**
(45) Date of publication and mention of the grant of the patent: **02.12.2015**
(21) Application number: 09777923.5
(22) Date of filing: 17.08.2009
(51) Int. Cl.: H04L 12/28, H04Q 9/00, H04L 12/26, G06F 13/00, G08C 15/06, G08C 17/00

(54) **METHOD AND APPARATUS FOR CONTROL OF HOUSEHOLD DEVICES**
VERFAHREN UND VORRICHTUNG ZUR KONTROLIERUNG VON HAUSHALTSGERÄTEN
PROCEDE ET APPAREIL POUR CONTROLLER DES APPAREILS DOMESTIQUES

(43) Date of publication of application: 27.06.2012
(73) Proprietor: VKR Holding A/S, 2970 Hørsholm (DK)
(72) Inventor: EBBE, Ulrik, Vagn, DK-2670 Greve (DK)
(74) Representative: Patentgruppen
(86) International application number: PCT/EP2009/005952
(87) International publication number: WO 2011/020478

(56) References cited:
- EP-A1- 0 924 949
- WO-A1-92/12590
- WO-A1-99/63450
- WO-A2-2006/036594

## Description

### TECHNICAL FIELD

The present application relates generally to control of household devices and in particular to automated control of windows, doors, awnings and blinds.

### BACKGROUND

Contemporary household devices such as windows, doors, screening devices, such as Venetian blinds or awnings for example, and lights may be remote controlled and according to pre-stored programs. It is also known to select a program according to a detection made by a sensor, such as a rain sensor, and propose the selected program to a user.

Such programs are activated by a user through the use of a remote control.

The patent document WO 2007/003194 discloses a system comprising at least one master unit and a plurality of slave units, wherein said master unit and said slave units comprise means for performing communication via radio frequency channels. The at least one master unit comprises means for transmitting control signals to said slave units, and the slave units are each provided with a unique address and are each associated with a controllable device. The at least one master unit comprises means for executing a sequential transmission of control signals to at least one of said slave units. This system is adapted to execute a pre-stored or recorded sequence of operations on the slave units upon user activation. Such slave units may be coupled to operate a window.

In prior art systems a user needs to remember which programs are available in order to select the appropriate program. And, in the case of user-specified programs a user needs to input the program himself which requires in-depth knowledge as to how the system that is being controlled is designed.

Thus, there exists a need for a manner of controlling household devices without the need for user attendance or in-depth understanding of the system design.

### SUMMARY

This need and other objectives and needs are satisfied through a method, an apparatus and a software according to the claims.

According to a first aspect an apparatus, comprising a controller configured to execute a smart function controlling at least one device to achieve an effect specified by a criterium for a desired effect of a group according to control parameters, wherein said group comprises at least one device is provided.

According to a second aspect a method, comprising executing a smart function controlling at least one device to achieve an effect specified by a criterion for a desired effect of a group according to control parameters, wherein said group comprises at least one device is provided.

According to a third aspect an apparatus comprising means for executing a smart function controlling at least one device to achieve an effect specified by a criterion for a desired effect of a group according to control parameters, wherein said group comprises at least one device.

According to a fourth aspect a computer program, comprising code for executing a smart function controlling at least one device to achieve an effect specified by a criterion for a desired effect of a group according to control parameters, wherein said group comprises at least one device when the computer program is run on a controller is provided.

### BRIEF DESCRIPTION OF THE DRAWINGS

For a more complete understanding of example embodiments of the present invention, reference is now made to the following descriptions taken in connection with the accompanying drawings in which:
Figures 1A and 1B each show a system comprising an apparatus according to an embodiment;
Figure 2 shows a view of a building in which a system according to an embodiment is installed in;
Figure 3 shows a schematic diagram of the cooperation and dependencies of components of an apparatus according to an embodiment;
Figure 4 shows a series of flowcharts according to an embodiment;
Figure 5 shows a flowchart of the general operation according to an embodiment;
Figure 6 shows a display view 610 of an apparatus according to an embodiment; and
Figure 7 shows a flowchart of the general operation according to an embodiment.

### DETAILED DESCRIPTON OF EMBODIMENTS

Example embodiments of the present invention are described in detail below

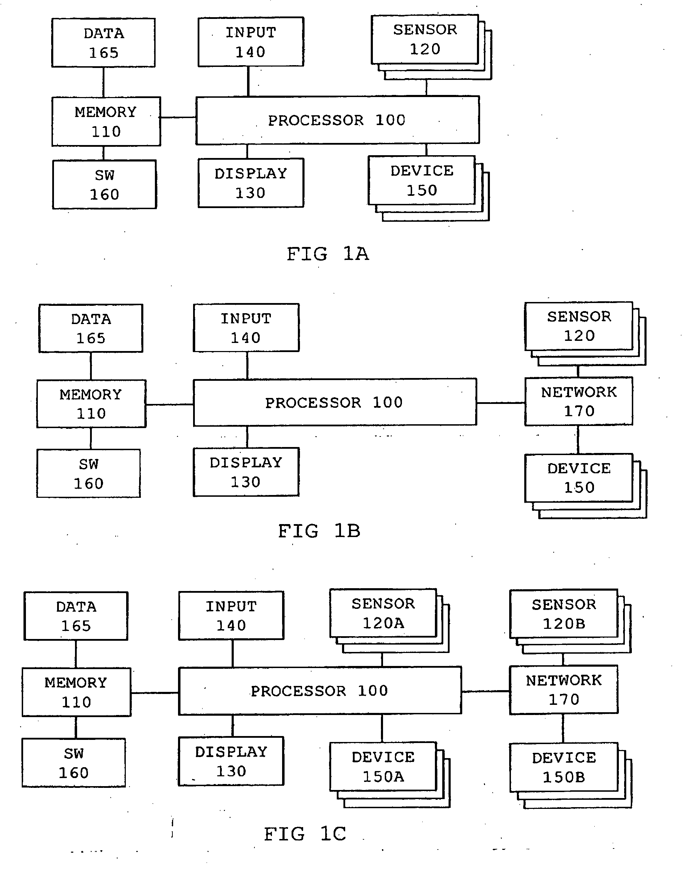

Figure 1A shows a system comprising an apparatus according to an embodiment of the teachings of this application.

The apparatus comprises a controller in the form of a processor 100 to which a memory 110 is connected. In one embodiment software 160 is stored in the memory. In one embodiment control information in the form of data 165 is stored in the memory.

In one embodiment a display 130 is connected to the apparatus. In one embodiment the display 130 is comprised in the apparatus. The controller 100 is configured to display data and other information on the display 130.

In one embodiment an input device 140 is connected to the apparatus. In one embodiment the input device 140 is comprised in the apparatus. In one embodiment the input device 140 and the display 130 are the same implemented by a touchdisplay 140/130. Other examples of input devices are keypad; scroll and select keys for selecting options form a menu being displayed on the display 130, a touchpad for controlling a cursor on the display, a cursor controlling input device such as a trackball, a mouse or a joystick. It should be clear that other input devices are also possible and are known to a skilled person.

In one embodiment the input device 140 is a remote control.

In one embodiment the input device 140 comprises a connection, such as a Universal serial Bus (USB), through which an external device can be connected and data can be downloaded from that device. In one embodiment the input device 140 comprises a disc reader such as a Compact Disc player through which data can be downloaded from a CD (compact Disc), a DVD (Digital Video Disc) or other alternative.

Connected to the apparatus is at least one household device 150. These devices 150 are the devices to be controlled by the apparatus and thus form part of the system. The controller 100 is configured to control a device 150 according to the control information 165 and control software 160 stored on the memory 110.

Examples of such devices are: window actuators, closures, blinds, awnings, shutters, venetian blinds, marquees, drapes, curtains, controlled glazing for example electrochromic, e-ink or liquid crystal, gates, doors, locks, alarms and security fans, Air-Condition units (ACs), radiators, heaters, or lamps.

In one embodiment at least one sensor 120 is connected to the apparatus 100. The controller 100 is configured to receive input from a sensor 120 and to control a device 150 in response thereto and according to the control information 165 and control software 160 stored on the memory 110.

Examples of such sensors are rain sensors, wind sensors including acceleration sensors, noise sensors, temperature sensors, light sensors, sun intensity sensor or sun tracking sensor (for example sun angle), weather station, room occupation sensors, timer or radio controlled clock, Global positioning system GPS units.

These sensors are said to be environmental in that they sense the environment.

In one embodiment a sensor 120 is implemented by a network connection such as an internet connection or a public media channel through which the controller 100 can obtain other information that is useful for controlling the device 150. Examples of such information are weather reports and public announcements. For example if there is a public announcement concerning a fire close by producing heavy (and possibly poisonous) smoke then it would not be good to open a window to lower the temperature.

Such sensors are said to be abstract in that they sense abstract information.

Other examples of sensors may relate to doors being opened or closed, RFID (Radio frequency Identification) tags or Bluetooth™ devices that for example signal the arrival or departure of a certain person. An example is when the lights are turned on, front door unlocked and windows opened as it is detected that the owner of the house drives up on the garageway. Or alternatively that the lights are turned out, doors locked and windows shut as the owner leaves the house.

Sensors may be active or passive or both. An active sensor pushes its readings while a passive sensor is prompted to give a reading. A sensor that is both passive and active can be set to be silent unless prompted until a certain threshold value is exceeded and then the reading is pushed. An example of a passive sensor is a thermometer. An example of an active sensor is a motion detector which pushes a reading as a motion is detected. An example of a sensor that is both passive and active is a wind speed sensor which is kept passive until a certain wind speed is measured.

In one embodiment, see figure 1B at least one sensor 120 is connected to the apparatus through a network connection 170.

In one embodiment at least one device 150 is connected to the apparatus through a network connection 170. In one embodiment the network 170 is wireless. Examples of techniques that may be used are Bluetooth™, Wireless LAN (Local Area Network) often referred to as WiFi (based on the IEEE 802.11 standard), low power sensor network or home automation communication like IEEE 802.15.4 or similar. The network 170 may also be data packets or messages communicated by cellular network.

In one embodiment the network 170 comprises the electric wiring of the building allowing any unit connected to the network 170 to communicate with one another through a technology similar to or using Power Line Communication (PLC) which operates by impressing a modulated carrier signal on the wiring power line system. Using such a network 170 has the benefit that no extra communication lines (wireless or hardwired) need to be installed for the system to operate.

Figure 1C shows a combination of the embodiments of figures 1A and 1B where some sensors 120A and/or devices 150A are connected to the apparatus directly and some sensors 120B and/or devices 150B are connected via the network 170.

In one embodiment the controller 100 is configured to group the devices 150 into functional groups. These functional groups may be related to a room, a section of a room, a sector covering more than one room or a combination. Each group has a label and the label is chosen to convey information on the functionality of the group.

In this detailed description focus will be put on rooms, but it should be understood that the same applies to sectors, sections and the possible combinations.

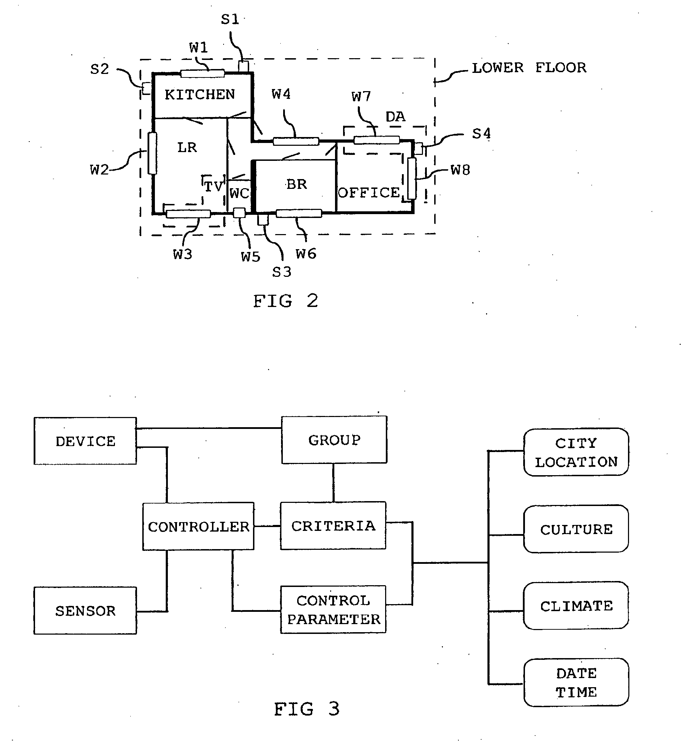

Figure 2 shows a view of a building having groups consisting of rooms (KITCHEN, OFFICE, WC, LR = Living Room, BR = Bed Room), sectors (DA = desk area, TV = TV area) and sections (LOWER FLOOR). It should be noted that even if it is not shown in figure 2 sections may extend over more than one room. The building has four rooms and one bathroom on the lower floor. It has eight windows W1-W8 and a number of doors (not numbered) and a number of sensors S1-S4. It should be noted that even if it is not shown in figure 2 sections may extend over more than one room. To keep the figure from getting too cluttered other devices commonly found in a house are not shown such as radiators, fans etc.

In one embodiment implementation each group is associated with a number and a value to differentiate its group and the corresponding desired results or effects. Table 1 shows an example for a listing of room types. In one embodiment the room types are predefined. In one embodiment the room types are provided by a user or by another device, possibly through a download or. In this example a memory storage unit of the size 1 byte (8 bits) is used to code the room types. As can be seen from the table the teachings herein are not only for controlling devices in a house, but also for controlling devices surrounding a house. In this example the inside devices are listed together and the outside devices are listed together. Table 1 gives a view of possible room and section groupings.

Each group (OFFICE etc) is associated with a number of criteria for a desired effect. For example an office area should be well lit, well ventilated, and cool and noise free while a TV area should not be well lit and perhaps a bit warm so that TV viewing becomes pleasant and cozy. In other words the criteria are expressions or measurable features of a goal to be met. Examples of such goals are: humidity reduction, air quality conservation, temperature conservation, temperature reduction, solar glare reduction, energy conservation, comfort conservation, privacy scenarios and security scenarios.

In one embodiment these criteria for a desired effect are stored in the information block 165 of the memory 110.

Also stored in the information block 165 are control parameters. The controller is configured to control the devices to achieve the effect specified by the criteria for desired effect according to the control parameters.

In one embodiment the controller is configured to prompt a user to input necessary configuration data such as room grouping, language, country, city, culture upon first start up or during setup.

In one embodiment the controller is configured to prompt a user to input a language to use.

In one such embodiment the language to use will be the language the controller displays information in.

In one such embodiment the language is matched by the controller against a database to find the country.

In one embodiment the controller is configured to deduce (possibly through a database lookup) a culture that corresponds to the language, the country, the area, or a combination of the language and the country.

In one embodiment the control parameters are dependant on a culture. Cultural aspects influence the desired effects to a great extent. For example for a building in a country which is strict on dress code the blinds may not be opened so lightly as for a building in a country which is less strict on dress code. The culture may be related to religion (Catholic), age (for example young sleep late and elder wake up early), language, gender (for example some may prefer fewer settings/functions), lifestyle or ethnic group etc.

In one embodiment the culture is expressly input to the controller 100 and stored in the memory 110. In one embodiment the culture is indirectly retrieved from a specified country or language. In one embodiment the language or country is directly specified by a user. In one embodiment the language or country is retrieved over a network connection. For example as an apparatus is connected it may obtain information as to its location through an internet connection and from that ascertain the country and/or language. In one embodiment the language or country is specified upon or before delivery and/or installation of the apparatus.

In one embodiment the control parameters are dependant on a climate. The climate may influence the desired effects and control parameters to a great extent. For example for a building in a warm climate where people are used to the sun and the warmth the parameters may be set to close the blinds more often whereas in a cold climate the parameters may be set to open the windows and blinds as often as possible to allow the inhabitants to enjoy the (rare) sunshine.

In one embodiment the climate is expressly input to the controller 100 and stored in the memory 110. In one embodiment the climate is indirectly retrieved from a specified country, city, town or position. In one embodiment the country, city, town or position is directly specified by a user. In one embodiment the country, city, town or position is retrieved over a network connection. For example as an apparatus is connected it may obtain information as to its location through an internet connection. In one embodiment the country, city, town or position is specified upon or before delivery and/or installation of the apparatus. In one embodiment the climate is determined by a sensor. For example a temperature sensor and sun sensor can establish the climate or season.

In one embodiment a control parameter is the mode or scenario of the household. Home controllers may use scenarios for example good morning (when user wakes up), good night (when user sleeps), Privacy (when user wished intimacy), good bye (when user leaves house), welcome (when user returns) or holiday (when user is gone for days).

In one embodiment a control parameter is the facing of the window or shade or room. The facing like North, east, west and south provides information about the climate, comfort and energy effects.

In one embodiment the control parameters are dependant on a city or country as certain laws and /traditions are common to that place. As for the climate the city and/or location may be retrieved in similar manners as the culture.

In one embodiment the control parameters and/or the criteria for desired effect are dependant on whether the position is in an urban or rural area as certain aspects, such as privacy, noise and security aspects, are different in a rural area than in an urban area. As for the climate whether the building is in an urban or a rural area may be retrieved in similar manners as the culture.

In one embodiment a controller 100 is configured to receive input from a sensor 120 and in response thereto check the control parameters for the affected groups and to control at least one device 150 to fulfill the criteria for desired effect associated with the affected groups.

Figure 3 shows a schematic diagram of the cooperation and dependencies of a controller, groups, parameters, and inputs. Figure 3 shows a controller being connected to a device and a sensor. The devices belong to a group (GROUP). The controller is also connected to a memory and through this memory to control parameters (CONTROL PARAMETERS) and criteria for desired effects (CRITERIA). The criteria are directly dependant on which group they belong to as is illustrated by the connection between GROUP and CRITERIA. The control parameters and the criteria are affected by system independent factors such as city/location/country, the culture, the climate and the date and/or time including seasons.

For example, by knowing the time and the location the controller can determine when the sun rises and settles (possibly through accessing a database comprising information on sunrise and settlement times for locations) and control the windows and shades accordingly.

In one embodiment a sensor is a time giving device such as a clock or a calendar. The time of day or of year has influence on the control of the device. For example, a user may not wish to have his windows open at night. Opening and closing blinds will have little effect on the temperature at nights.

By connecting a calendar application to the controller, either through the memory as a software unit or as a sensor using an external calendar the control parameters may be affected. For example, if the calendar specifies that the user is on holiday the windows should remain closed to prevent burglars from entering the house, motion detectors could be activated and noise sensors could be coupled to an alarm notification system and heating could be minimized to lower the energy consumption.

As mentioned other control aspects may relate to security issues and can be related to location, culture and additional sensors such as calendars. For example a building in an area infamous for its high number of break-ins would not open the windows as much as a building in an area where crime is relatively low.

In one embodiment a controller is configured to associate devices whose functionality complements each other. In one such embodiment the controller can select, based on the control parameters if a device should be activated or if a complementing device should be activated. This finds use if one device is deactivated or if other criteria requires that the device is kept inactive or in its current position. Examples of such situations can be when a window is fully open, a fan is already turned off or a window faces a street where crime is high.

In one embodiment the controller is configured to retrieve a computer model of the building. The model can be retrieved from the memory or from an external source such as a database or remote memory connected through an input port (140).

In one such embodiment the controller is configured to perform flow calculations of the buildings geometry to determine the effect of one window on the rest of the building. For example the flow through a building differs substantially whether one window is open or two and the position of these two windows relative each other and naturally the flow characteristics are dependant on the geometry of the building.

In this way a controller can determine whether one room, for example facing the street, can be kept cool by opening two windows in other rooms for example facing a backyard. For example, referring to figure 2. If windows W2, W3, W5 and W6 face a street and windows W1, W4, W7 and W8 face a fenced-in backyard the living room may be kept cool even when the windows W2 and W3 are kept closed if the windows in the kitchen W1 and in the office W8 are opened. Provided of course that the doors between the rooms are open as a draft can then flow from the office through the hall and living room and out the kitchen.

See below for some use cases on how the device can be controlled by the controller.

In one embodiment the controller is configured to directly control the devices. In such an embodiment the controller reads the input from the sensors, matches it against the control parameters to fulfill the criteria for desired result or effect.

In one embodiment the controller is configured to predictively control the devices. In such an embodiment the controller reads the input from the sensors matches it against the control parameters and based on further information, such as from a weather report retrieved through a sensor; control the devices to achieve the desired effect in the future expecting a change. For example, if strong winds are expected, the controller opts for increasing the AC (air conditioning) instead of opening the windows as thee windows will then already be closed when the strong winds are detected and thereby reducing the risk that the system suffers from a malfunction during a relatively critical time. Another example is when the temperature is already high, but a heat wave is expected and the controller then controls the devices to lower the temperature before the heat wave strikes as it might be difficult to lower the heat once it has risen. In other words the controller is configured to take preemptive measures.

In one embodiment the controller is configured to predictively control the devices based on an assumption.

In one embodiment the assumption is based on historical data. In one such embodiment a data log is kept of the sensor data over a time period.

In one such embodiment the controller is configured to detect a pattern in said data log and to adjust the control parameters accordingly. For example if it is detected that for the last days a temperature rise of 10 degrees Celsius has happened around noon the controller initiates temperature lowering actions shortly before noon so that the effects of the temperature rise is minimized.

In one such embodiment the controller is configured to detect a trend in said data log and to adjust the control parameters accordingly. For example if it is detected that for the last days the temperature has risen 2 degrees Celsius every day the controller initiates the temperature lowering actions earlier every day to compensate, or alternatively it initiates multiple actions such as instead of opening the windows even more other steps may also be taken such as increasing fan speed.

It should be noted that multiple actions are also possible and desirable for all modes of control taking use of the full range of devices and sensors available.

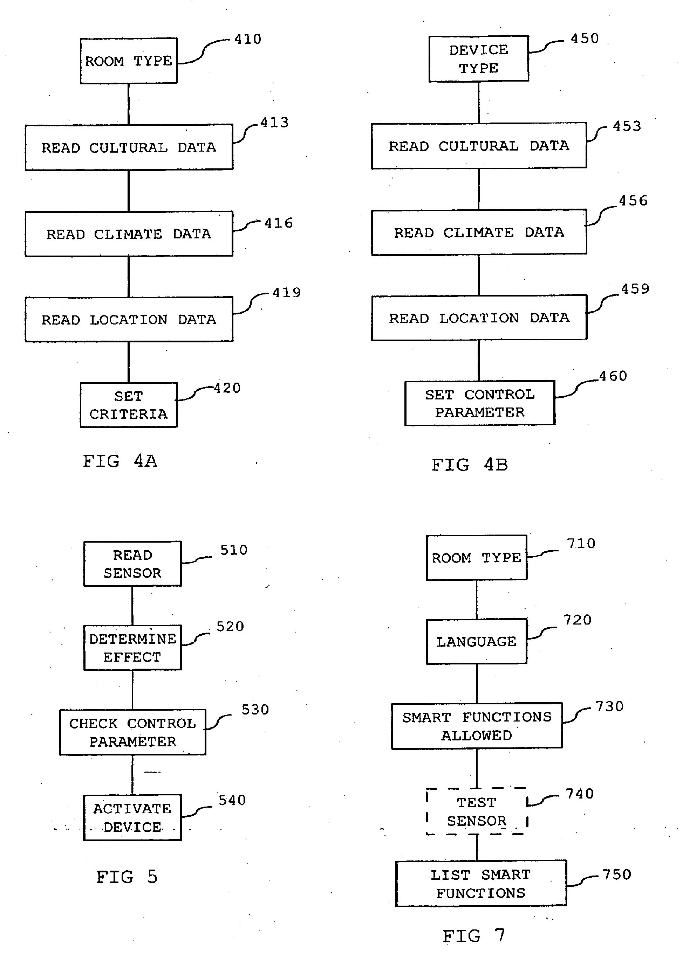

Figure 4 shows a series of flowcharts according to an embodiment.

Figure 4a shows the steps taken when a new room or group is specified. First the room type is specified, 410. There are different ways of doing this as has been detailed above. Later data such as cultural 413, climate 416 and location 419 data are read. It should be noted that other data may also affect the criteria for desired effect as has been discussed above. Lastly the criteria for the room are set, 420.

Figure 4a shows the steps taken when a new room or group is specified. First the device type is specified, 450. There are different ways of doing this as has been detailed above. Later data such as cultural 453, climate 456 and location data 459 are read. It should be noted that other data may also affect the criteria for desired effect as has been discussed above. Lastly the control parameters for the device are set, 460.

Figure 5 shows a flowchart of the general operation according to an embodiment.

First a sensor is read by the controller 510. Alternatively a sensor pushes the reading to the controller. The controller determines how the sensor data affects the desired effect 520 and checks the control parameters how to best fulfill the criteria for the desired effect 530 and activates a device accordingly 540.

In one embodiment the controller is configured to execute an action or a program automatically as it is determined that one is necessary.

In one embodiment the controller is configured to prompt a user by a notification offering an action or a program such as a smart function.

In one embodiment the controller is configured to determine whether a notification should be given or not depending on the room type.

In one embodiment the notification is visual, such as a blinking screen or a pop up window being displayed.

In one embodiment the notification is audible, such as a spoken (played back or computer generated through text o speech) message.

In one embodiment the notification is tactile, such as a vibration.

The controller is further configured to receive an acceptance from a user and in response thereto execute the proposed action or program.

In one embodiment the acceptance is tactile, for example through a keypress.

In one embodiment the acceptance is audible, for example through a voice command or a clapping sound.

In one embodiment the controller is configured to display a list of at least on proposed action in a list.

In such an embodiment the controller is configured to receive scroll commands from a user to scroll through the list and to receive a select command selecting an action to be executed.

In one such embodiment the controller is configured to receive the select command through a press on a soft key.

In one such embodiment the controller is configured to receive the select command through a touch input indicating a press on the action being displayed on a touch display (130).

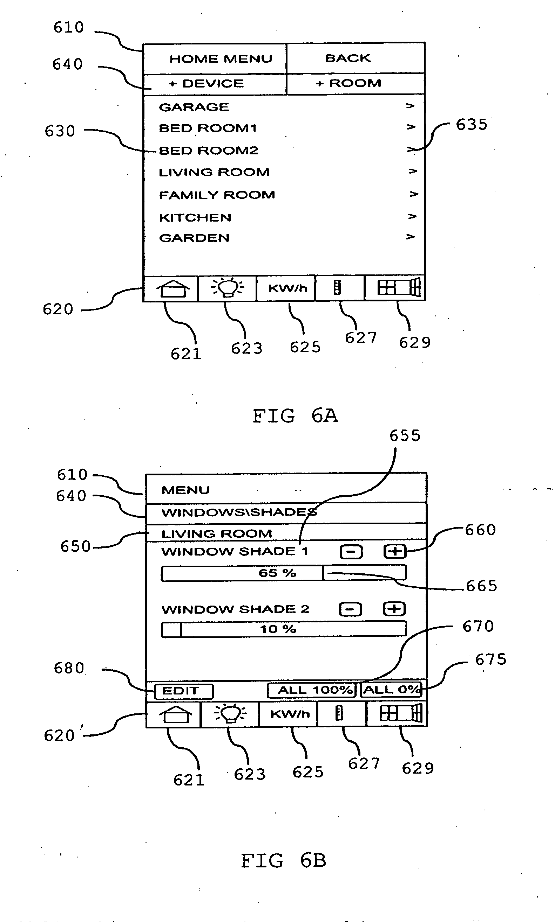

Figure 6 shows a display view 610 of an apparatus according to an embodiment. In this example the display is rather limited to allow it to be housed in a portable apparatus. In this example the apparatus is a remote control having a touch display. It should be noted that the teachings of this application and this embodiment may also be applied to other user interfaces (possibly based on a keypad) and for other apparatus.

In the bottom part of the display view 610 a list of tabs 620 is displayed. The tabs allow a user to access different aspects of the system. In this example icons for Rooms 621, Lighting 623, Power 625, HVAC (Heating Ventilation and Air Conditioning) 627 and Windows 629 is shown.

By selecting one of these icons a listing of the items belonging to that aspect is shown. In the example of figure 6A a list of rooms 630 is displayed. Each item on the list is provided with an icon or other indication that more information may be shown and/or edited. In this example a small arrow 635 is shown next to the room name. Selecting the arrow will produce a list of devices that are grouped within the room to be shown in the display view 610.

In this example there is also provided an icon 640 for adding a room or a device to a room. In this example the icon is for adding a device to a room.

Figure 6B shows what is displayed in one example if the icon for Windows 629 is selected.

Similar views are shown for the other devices if the associated icon 623, 625, 627 is chosen.

In this example there is one view for each room for each device type. Each device has a label 650 indicating which room the device is grouped to. Each device also has a functional description 655 that indicates the function of the device. In this example the Motorized shades for the window in the Master bedroom is displayed.

Functional buttons 660 that control the device are also displayed which offer direct control of the device. In this example the buttons are to open or close the shades. It is also possible to have buttons to open windows to a preset degree for example to 20, 40, 60 and 80 percent.

In this example a slider 665 is also displayed allowing the user to continuously control the device. There is also displayed a button for editing the windows 680.

In one embodiment a controller is also configured to activate or deactivate a device. A deactivated device will not be controlled by the controller when it executes the actions to achieve the desired effect. In the embodiment of figure 6B two virtual buttons 670, 675 are displayed and offer a user the possibility to activate all 675 window devices or to deactivate 670 all window devices.

Figure 7 shows a flowchart of an embodiment. A room type is identified 710 and a language is determined 720 and based on this it is determined whether any smart functions should be allowed and if such exists 730. In one embodiment a sensor is then read 740 to test if the value is true or in violation of a criterion. In figure 7 this optional step is marked as optional by being drawn in dashed lines. A list of appropriate smart functions is presented to a user 750.

In one embodiment the controller is configured to execute smart functions. These smart programs are set up according to the cultural and other aspects influence on one or more rooms. Table 2 shows a listing of such smart fun functions examples.

Other use cases are:
Bathroom 1: The ventilation and the door lock are activated for 5 minutes after use of toilet.
Bathroom 2: Ventilation is set to maximum after showering to remove steam.
Bedroom 1: Energy saving program closing shading devices 20 minutes after alarm clock or according to calendar entry that work has started.
Bedroom 2: Offer greater privacy by closing shading devices at night.
Bedroom 3: Offer better sleep by turning of heating at night and turning it on just before morning.
Bedroom 4: Turn off all motor actuated devices during night to keep noise level down.
Kitchen 1: Open shades at morning to let in light.
Kitchen 2: Open windows when biggest heater on the stove is turned on to ventilate smoke.
Living room 1: Close shades as TV is turned on.
Living room 2: Close windows if noise level is too high. Works well for both external noise and internal noise.
Living room 3: Regular ventilation for example open windows for 5 minutes every hour.
Hall 1: Arrival of resident allows opening of windows and doors.
Hall 2: Departure of resident disables opening of windows and doors.

As another example an office should be well lit, but if the sun is too high the sunlight could interfere with the monitors (reflections) and thus the blinds should be closed, while leaving the windows open to keep the temperature down and the room well-ventilated.

An example using complementing devices is when Kitchen 2 is executed and a rain sensor signals that it has started to rain. The window should then be closed and the complementing device the fan should be activated.

Another example is when for example (referring to figure 2) when window W3 is open to ventilate the living room and the rain sensor S3 signals that it is raining, while the rain sensor S2 is silent. The controller will then either automatically or after user acceptance close window W3 and open window W2 to protect the living room from the rain.

According to the embodiments above an apparatus which provide a user with smart functions that are tailored after user specific needs for different rooms or other groups is provided which does not require in-depth understanding of functions as the apparatus determines which actions are best at any given time depending on the current situation.

Without in any way limiting the scope, interpretation, or application of the claims appearing below, it is possible that a technical effect of one or more of the example embodiments disclosed herein may be improved control of household devices for more desired effect. Another possible technical effect of one or more of the example embodiments disclosed herein may be easier setup and control of household devices.

Embodiments of the present invention may be implemented in software, hardware, application logic or a combination of software, hardware and application logic. The software, application logic and/or hardware may reside in the memory 110 or a memory internal to the processor 100. If desired, part of the software, application logic and/or hardware may reside on a device to be connected to an input port. The application logic, software or an instruction set is preferably maintained on any one of various conventional computer-readable media. In the context of this document, a "computer-readable medium" may be any media or means that can contain, store, communicate, propagate or transport the instructions for use by or in connection with an instruction execution system, apparatus, or device.

If desired, the different functions discussed herein may be performed in a different order and/or concurrently with each other. Furthermore, if desired, one or more of the above-described functions may be optional or may be combined.

It is also noted herein that while the above describes example embodiments of the invention, these descriptions should not be viewed in a limiting sense. Rather, there are several variations and modifications which may be made without departing from the scope of the present invention as defined in the appended claims.

### TABLES

### Room type

**Table 1 - Room types and the corresponding coding.**

| Numerical Value | Type |
|---|---|
| 0 | NONE |
| 1 | KITCHEN |
| 2 | BATHROOM |
| 3 | TOILET |
| 4 | BEDROOM |
| 5 | CHILDREN' SROOM |
| 6 | OFFICE |
| 7 | HALL |
| 8 | STAIRCASE |
| 9 | LIVING ROOM |
| 10 | DINING ROOM |
| 11 | SUN ROOM |
| 12 | MEDIA ROOM |
| 13 | UTILITY ROOM |
| 14 | GARAGE |
| 15 | CELLAR |
| ··· | ··· |
| 249 | GARDEN |
| 250 | DRIVEWAY |
| 251 | POOL |
| 252 | PERIPHERY |
| 253 | PORCH |
| 254 | PATIO |
| 255 | FACTORY DEFAULT |

### Smart functions

**Table 2 shows examples of smart functions and their description and example implementations.**

| Smart Function | Description | Example |
|---|---|---|
| Wellbeing | The air inside the house remains healthy and fresh with a minimum of energy loss | When the humidity detected is above the desired level, specific roof and vertical windows are opened for 5 minutes. |
| Solar protection | Solar heat gain in the house is reduced in the summer or when appropriate | When sun is detected above a certain temperature level, awnings and blinds are rolled down to reduce solar heat gain. |
| | | When sun is detected, the opening/closing of windows is activated to reduce the solar heat gain. |
| Indirect light | Reduce solar glare and heat gain | If some windows face north these are used to let in light, while windows facing east, south, west depending on time/sun position are dimmed. |
| Smart ventilation | The house ventilation is limited in time by means of temperature measurements | When the difference of temperature between inside and outside the house is above 10° C, the windows are automatically closed after 3 minutes of ventilation. |
| Natural air conditioning | Fresh air is used to cool down the house in summer or when appropriate | Thanks to inside and outside temperature sensors, windows are opened during the night to cool down the house. Windows are closed and awnings and blinds are rolled down during the day to reduce the heat build up. |
| Visual Comfort | Light inside the house is optimized, protection from glaring is provided | When the luminosity in a room exceeds the desired level, the vertical blinds are rolled down until reaching a comfortable light level. |
| | | When the luminosity in a room is above the desired level, the artificial light is reduced until reaching a comfortable light level. |
| Solar UV protection | Furniture and plants are protected against solar rays. | When the solar rays are directed on my Renoir tableau, the protection screens go in the relevant position to provide shade. |
| | | In my winter garden, indoor plants are protected against harmful solar rays by using venetian blinds, roof awnings... |
| Holiday | Holiday when I leave my house for a long time (some days), from outside my house. | Home left for holiday, all roller shutters are closed apart from the roof shutter to let the light come in for my house plants, all lights are turned off, the main water pipe is closed and presence simulation is activated. |
| Good Morning | Wake up in morning event in bedroom, but may also execute functions in other rooms. | When I wake up, the roller shutters in my bedroom are slightly opened, the roller shutters in the bathroom and the kitchen are completely opened and the heating in the kitchen is increased. |
| | | • after a while, the ventilation is activated in my bedroom. |
| | | • When I wake up the house is comfortably warm. |
| | | • When I wake up my alarm system allows me to move anywhere in the house |

## Claims

1. An apparatus adapted to control household devices (150) selected from the group consisting of windows, doors, blinders, awnings, and shutters, said apparatus comprising:
a controller (100) configured to execute a smart function controlling at least one device (150) to achieve an environmental effect specified by a criterion for a desired effect of a room according to control parameters,
wherein said room comprises at least one device (150), and,
wherein said controller (100) is further configured to receive input from a sensor (120) and in response thereto check the control parameters for the affected rooms and to control at least one device (150) to fulfill the criteria for desired effect associated with the affected rooms,
wherein a room is associated with a function and said smart function is tailored after said room's function,
wherein the apparatus is configured to receive an input indicating the room type during a setup phase of said apparatus,
wherein the room types are predefined and the input indicating a room type indicates one of the predefined room types.

2. The apparatus according to claim 1, wherein said controller (100) is further configured to associate a first and a second device (150) whose functionality complements each other and wherein said controller (100) is further configured to select, based on the control parameters, if a device (150) should be activated or if a complementing device (150) should be activated to fulfill the criteria for a desired effect.

3. The apparatus of claim 2, wherein said first device (150) is comprised in a first room and said second device (150) is comprised in a second room.

4. The apparatus according to any of claims 1-3, wherein said sensor (120) is a time giving device such as a clock or a calendar and said controller (100) is configured to receive input from said time giving device.

5. The apparatus according to any of claims 1-4, wherein said controller (100) is further configured to retrieve a computer model of a building being associated with at least one room comprising a device (150) and to perform flow calculations of the buildings geometry to determine the effect of a device (150) in a first room on the other rooms being associated with the building.

6. The apparatus according to any of claims 1-5, wherein said controller (100) is further configured to predictively control the device (150) based on historical data.

7. The apparatus according to any of claims 1-6, wherein said controller (100) is further configured to receive an input indicating a language and thereby deduce a country that corresponds to the language and to deduce a climate that corresponds to said country.

8. The apparatus according to any of claims 1-7, wherein said controller (100) is further configured to receive an input indicating a language or a country or an area and thereby deduce a culture that corresponds to a language, a country, an area, or a combination of the language and the country and/or the area.

9. The apparatus according to any of claims 1-8, wherein said controller (100) is further configured to execute an action or a program automatically as it is determined that one is necessary or to prompt a user by a notification offering an action or a program, such as a smart function, and to receive a user acceptance and in response thereto execute said action or program.

10. The apparatus according to any of claims 1-9, wherein said criteria for a desired effect depend on one taken from the group comprising a specified country, a specified climate, a specified culture, a specified country, a specified climate and a specified culture.

11. A system comprising an apparatus according to claim 1, at least one sensor (120) and at least one device (150).

12. The system according to claim 11, wherein said at least one sensor (120) is abstract and where an abstract sensor (120) is one taken from a group comprising a network connection, such as an internet connection, or a public media channel and wherein an environmental sensor (120) is one taken from a group comprising rain sensor (120), wind sensor (120), noise sensor (120), temperature sensor (120), light sensor (120), sun intensity sensor (120), sun tracking sensor (120), weather station, room occupation sensor (120), timer or radio controlled clock.

13. The system according to claim 11, wherein said at least one sensor (120) is environmental, wherein an environmental sensor (120) is one taken from a group comprising rain sensor (120), wind sensor (120), noise sensor (120), temperature sensor (120), light sensor (120), sun intensity sensor (120), sun tracking sensor (120), weather station, room occupation sensor (120), timer or radio controlled clock.

14. The system according to claim 11, wherein said system further comprises at least one device (150) where said at least one device (150) is one taken from a group comprising window actuators, window closers, blinds, awnings, shutters, venetian blinds, marquees, drapes, curtains, controlled glazing for example electrochromic, e-ink or liquid crystal, gates, doors, locks, alarms and security fans, Air-Condition units, radiators, heaters, or lamps.

15. A method for control of household devices (150) selected from the group consisting of windows, doors, blinders, awnings, and shutters, comprising: executing a smart function controlling at least one device (150) to achieve an environmental effect specified by a criterion for a desired effect of a room according to control parameters, wherein said room comprises at least one device (150), and, receiving input from a sensor (120) and in response thereto checking the control parameters for the affected room and controlling at least one device (150) to fulfill the criteria for desired effect associated with the affected room,
wherein a room is associated with a function and said smart function is tailored after said room's function, wherein method comprises receiving an input indicating the room type during a setup phase of said apparatus, wherein the room types are predefined and the input indicating a room type indicates one of the predefined room types.

## Patentansprüche

1. Vorrichtung, die dafür eingerichtet ist, Wohnungsvorrichtungen (150) zu steuern, die aus der Gruppe gewählt sind, die aus Folgendem besteht: Fenster, Türen, Jalousien, Markisen und Rollläden, wobei die Vorrichtung Folgendes umfasst:
eine Steuerung (100), die dafür eingerichtet ist, eine intelligente Funktion auszuführen, die wenigstens eine Vorrichtung (150) steuert, um, basierend auf Steuerparametern, eine Raumklimawirkung zu erreichen, die durch ein Kriterium für eine gewünschte Wirkung auf einen Raum definiert ist,
wobei der Raum wenigstens eine Vorrichtung (150) umfasst, und
wobei die Steuerung (100) außerdem dafür eingerichtet ist, eine Eingabe von einem Sensor (120) zu erhalten und in Reaktion darauf die Steuerparameter für die betroffenen Räume zu überprüfen und die wenigstens eine Vorrichtung (150) zu steuern, um die Kriterien für die gewünschte Wirkung zu erfüllen, die den betroffenen Räumen zugeordnet sind,
wobei einem Raum eine Funktion zugeordnet ist und die intelligente Funktion entsprechend der Funktion des Raums konzipiert ist,
wobei die Vorrichtung dafür eingerichtet ist, eine Eingabe zu erhalten, die den Raumtyp angibt, und dies während einer Einrichtungsphase der Vorrichtung,
wobei die Raumtypen vordefiniert sind und die Eingabe, die einen Raumtyp angibt, einen der vordefinierten Raumtypen angibt.

2. Vorrichtung nach Anspruch 1, wobei die Steuerung (100) außerdem dafür eingerichtet ist, eine erste und eine zweite Vorrichtung (150) einander zuzuordnen, deren Funktionalität zueinander komplementär ist, und wobei die Steuerung (100) außerdem dafür eingerichtet ist, basierend auf den Steuerparametern auszuwählen, ob eine Vorrichtung (150) zu aktivieren ist oder ob eine komplementäre Vorrichtung (150) zu aktivieren ist, um die Kriterien für eine gewünschte Wirkung zu erfüllen.

3. Vorrichtung nach Anspruch 2, wobei die erste Vorrichtung (150) in einem ersten Raum enthalten ist und die zweite Vorrichtung (150) in einem zweiten Raum enthalten ist.

4. Vorrichtung nach einem der Ansprüche 1 bis 3, wobei der Sensor (120) eine zeitgebende Vorrichtung ist, wie etwa eine Uhr oder ein Kalender, und die Steuerung (100) dafür eingerichtet ist, eine Eingabe von der zeitgebenden Vorrichtung zu erhalten.

5. Vorrichtung nach einem der Ansprüche 1 bis 4, wobei die Steuerung (100) außerdem dafür eingerichtet ist, ein Computermodell eines Gebäudes abzurufen, das wenigstens einem Raum zugeordnet ist, der eine Vorrichtung (150) umfasst, und Flussberechnungen für die Geometrie des Gebäudes auszuführen, um die Wirkung einer Vorrichtung (150) in einem ersten Raum auf die anderen dem Gebäude zugeordneten Räume zu bestimmen.

6. Vorrichtung nach einem der Ansprüche 1 bis 5, wobei die Steuerung (100) außerdem dafür eingerichtet ist, basierend auf vergangenen Daten die Vorrichtung (150) prädiktiv zu steuern.

7. Vorrichtung nach einem der Ansprüche 1 bis 6, wobei die Steuerung (100) außerdem dafür eingerichtet ist, eine Eingabe zu empfangen, die eine Sprache angibt, und dadurch ein Land abzuleiten, das zu dieser Sprache gehört, und ein Klima abzuleiten, das zu dem Land gehört.

8. Vorrichtung nach einem der Ansprüche 1 bis 7, wobei die Steuerung (100) außerdem dafür eingerichtet ist, eine Eingabe zu empfangen, die eine Sprache oder ein Land oder ein Gebiet angibt, und dadurch eine Kultur abzuleiten, die zu einer Sprache, einem Land, einem Gebiet oder einer Kombination aus der Sprache und dem Land und/oder dem Gebiet gehört.

9. Vorrichtung nach einem der Ansprüche 1 bis 8, wobei die Steuerung (100) außerdem dafür eingerichtet ist, eine Aktion oder ein Programm automatisch auszuführen, wenn festgestellt wird, dass dies notwendig ist, oder einen Benutzer zu einer Eingabe aufzufordern, und dies durch eine Meldung, die eine Aktion oder ein Programm anbietet, wie etwa eine intelligente Funktion, und eine Zustimmung durch den Benutzer zu erhalten und in Reaktion darauf die Aktion oder das Programm auszuführen.

10. Vorrichtung nach einem der Ansprüche 1 bis 9, wobei die Kriterien für eine gewünschte Wirkung von einem Punkt abhängen, der aus einer Gruppe kommt, die Folgendes umfasst: ein definiertes Land, ein definiertes Klima, eine definierte Kultur, ein definiertes Land, ein definiertes Klima und eine definierte Kultur.

11. System, das eine Vorrichtung nach Anspruch 1, wenigstens einen Sensor (120) und wenigstens eine Vorrichtung (150) umfasst.

12. System nach Anspruch 11, wobei der wenigstens eine Sensor (120) abstrakt ist und wobei ein abstrakter Sensor (120) aus einer Gruppe kommt, die Folgendes umfasst: eine Netzwerkverbindung, wie etwa eine Internetverbindung, oder einen öffentlichen Medienkanal, und wobei ein Umgebungssensor (120) aus einer Gruppe kommt, die Folgendes umfasst: Regensensor (120), Windsensor (120), Geräuschsensor (120), Temperatursensor (120), Lichtsensor (120), Sonneneinstrahlungssensor (120), Sonnenstand-Verfolgungssensor (120), Wetterstation, Raumbelegungssensor (120), Zeitgeber oder funkgesteuerte Uhr.

13. System nach Anspruch 11, wobei der wenigstens einen Sensor (120) ein Umgebungssensor ist, wobei ein Umgebungssensor (120) aus einer Gruppe kommt, die Folgendes umfasst: Regensensor (120), Windsensor (120), Geräuschsensor (120), Temperatursensor (120), Lichtsensor (120), Sonneneinstrahlungssensor (120), Sonnenstand-Verfolgungssensor (120), Wetterstation, Raumbelegungssensor (120), Zeitgeber oder funkgesteuerte Uhr.

14. System nach Anspruch 11, wobei das System außerdem wenigstens eine Vorrichtung (150) umfasst und wobei die wenigstens eine Vorrichtung (150) aus einer Gruppe kommt, die Folgendes umfasst: Fenster-Aktoren, Fensterschließer, Verdunkelungen, Markisen, Rollläden, Jalousien, Schirmdächer, Vorhänge, Gardinen, gesteuerte Verglasungen, beispielsweise elektrochrom, e-Tinte oder Flüssigkristall, Tore, Türen, Schlösser, Alarme und Sicherheitslüfter, Klimaanlageneinheiten, Radiatoren, Heizkörper oder Lampen.

15. Verfahren zur Steuerung von Wohnungsvorrichtungen (150), die aus der Gruppe gewählt sind, die aus Folgendem besteht: Fenster, Türen, Jalousien, Markisen und Rollläden, Folgendes umfassend: Ausführen einer intelligenten Funktion, die wenigstens eine Vorrichtung (150) steuert, um, basierend auf Steuerparametern, eine Raumklimawirkung zu erreichen, die durch ein Kriterium für eine gewünschte Wirkung auf einen Raum definiert ist, wobei der Raum wenigstens eine Vorrichtung (150) umfasst, und Erhalten einer Eingabe von einem Sensor (120) und in Reaktion darauf, Überprüfen der Steuerparameter für die betroffenen Räume und Steuern der wenigstens einen Vorrichtung (150), um die Kriterien für die gewünschte Wirkung zu erfüllen, die den betroffenen Räumen zugeordnet sind,
wobei einem Raum eine Funktion zugeordnet ist und die intelligente Funktion entsprechend der Funktion des Raums konzipiert ist, wobei das Verfahren das Erhalten einer Eingabe umfasst, die den Raumtyp angibt, und dies während einer Einrichtungsphase der Vorrichtung, wobei die Raumtypen vordefiniert sind und die Eingabe, die einen Raumtyp angibt, einen der vordefinierten Raumtypen angibt.

## Revendications

1. Appareil apte à commander des dispositifs ménagers (150) choisis dans le groupe constitué de fenêtres, de portes, de jalousies, de stores, et de volets, ledit appareil comprenant :
un dispositif de commande (100) configuré pour exécuter une fonction intelligente commandant au moins un dispositif (150) pour obtenir un effet environnemental spécifié par un critère pour un effet souhaité d'une pièce selon des paramètres de commande,
dans lequel ladite pièce comprend au moins un dispositif (150), et
dans lequel ledit dispositif de commande (100) est en outre configuré pour recevoir une entrée d'un capteur (120) et en réponse à celle-ci vérifier les paramètres de commande pour les pièces concernées et commander au moins un dispositif (150) afin de satisfaire les critères pour un effet souhaité associé aux pièces concernées,
dans lequel une pièce est associée à une fonction et ladite fonction intelligente est personnalisée en fonction de ladite fonction de la pièce,
dans lequel l'appareil est configuré de façon à recevoir une entrée indiquant le type de pièce, pendant une phase de paramétrage dudit appareil,
dans lequel les types de pièce sont prédéfinis et l'entrée indiquant un type de pièce indique un des types de pièce prédéfinis.

2. Appareil selon la revendication 1, dans lequel ledit dispositif de commande (100) est en outre configuré de façon à associer un premier et un second dispositifs (150) dont les fonctionnalités se complètent et dans lequel ledit dispositif de commande (100) est en outre configuré pour sélectionner, sur la base des paramètres de commande, si un dispositif (150) doit être activé ou si un dispositif complémentaire (150) doit être activé pour satisfaire les critères visant à obtenir un effet souhaité.

3. Appareil selon la revendication 2, dans lequel ledit premier dispositif (150) est compris dans une première pièce et ledit second dispositif (150) est compris dans une seconde pièce.

4. Appareil selon l'une quelconque des revendications 1 à 3, dans lequel ledit capteur (120) est un dispositif donnant l'heure comme une horloge ou un calendrier et ledit dispositif de commande (100) est configuré pour recevoir une entrée dudit dispositif donnant l'heure.

5. Appareil selon l'une quelconque des revendications 1 à 4, dans lequel ledit dispositif de commande (100) est en outre configuré pour récupérer un modèle informatique d'un immeuble associé à au moins une pièce comprenant un dispositif (150) et pour effectuer des calculs de flux de la géométrie de l'immeuble, afin de déterminer l'effet d'un dispositif (150) dans une première pièce sur les autres pièces associées à l'immeuble.

6. Appareil selon l'une quelconque des revendications 1 à 5, dans lequel ledit dispositif de commande (100) est en outre configuré pour commander de manière prédictive le dispositif (150) sur la base de données historiques.

7. Appareil selon l'une quelconque des revendications 1 à 6, dans lequel ledit dispositif de commande (100) est en outre configuré pour recevoir une entrée indiquant une langue et déduire ainsi un pays qui correspond à la langue et déduire un climat qui correspond audit pays.

8. Appareil selon l'une quelconque des revendications 1 à 7, dans lequel ledit dispositif de commande (100) est en outre configuré pour recevoir une entrée indiquant une langue ou un pays ou une zone et déduire ainsi une culture qui correspond à une langue, un pays, une zone, ou une combinaison de la langue et du pays et/ou de la zone.

9. Appareil selon l'une quelconque des revendications 1 à 8, dans lequel ledit dispositif de commande (100) est en outre configuré pour exécuter une action ou un programme automatiquement lorsqu'il est déterminé que cela est nécessaire ou pour inviter un utilisateur par une notification proposant une action ou un programme, comme une fonction intelligente, et pour recevoir une acceptation d'utilisateur et en réponse à celle-ci exécuter ladite action ou ledit programme.

10. Appareil selon l'une quelconque des revendications 1 à 9, dans lequel lesdits critères visant à obtenir un effet souhaité dépendent d'un élément pris dans le groupe comprenant un pays spécifié, un climat spécifié, une culture spécifiée, un pays spécifié, un climat spécifié et une culture spécifiée.

11. Système comprenant un appareil selon la revendication 1, au moins un capteur (120) et au moins un dispositif (150).

12. Système selon la revendication 11, dans lequel ledit au moins un capteur (120) est abstrait et dans lequel un capteur abstrait (120) est un élément pris dans un groupe comprenant une connexion réseau, telle qu'une connexion internet, ou une chaîne de média public et dans lequel un capteur environnemental (120) est un élément pris dans un groupe comprenant un capteur de pluie (120), un capteur de vent (120), un capteur de bruit (120), un capteur de température (120), un capteur de lumière (120), un capteur d'intensité solaire (120), un capteur de poursuite solaire (120), une station météorologique, un capteur d'occupation de l'espace (120), une minuterie ou une horloge radiocommandée.

13. Système selon la revendication 11, dans lequel ledit au moins un capteur (120) est environnemental, dans lequel un capteur environnemental (120) est un élément pris dans un groupe comprenant un capteur de pluie (120), un capteur de vent (120), un capteur de bruit (120), un capteur de température (120), un capteur de lumière (120), un capteur d'intensité solaire (120), un capteur de poursuite solaire (120), une station météorologique, un capteur d'occupation de l'espace (120), une minuterie ou une horloge radiocommandée.

14. Système selon la revendication 11, dans lequel ledit système comprend en outre au moins un dispositif (150), où ledit au moins un dispositif (150) est un élément pris dans un groupe comprenant des actionneurs de fenêtres, des systèmes de fermeture de fenêtres, des jalousies, des stores, des volets, des stores vénitiens, des tentures, des drapages, des rideaux, des vitrages commandés, par exemple électrochromiques, à encre électronique ou à cristaux liquides, des portails, des portes, des serrures, des alarmes et des ventilateurs de sécurité, des unités de climatisation, des radiateurs, des chauffages ou des lampes.

15. Procédé de commande de dispositifs ménagers (150) choisis dans le groupe constitué de fenêtres, de portes, de jalousies, de stores et de volets, comprenant :
l'exécution d'une fonction intelligente commandant au moins un dispositif (150) pour atteindre un effet environnemental spécifié par un critère pour un effet souhaité d'une pièce selon des paramètres de commande, dans lequel ladite pièce comprend au moins un dispositif (150), et la réception d'une entrée d'un capteur (120) et en réponse à celle-ci la vérification des paramètres de commande pour la pièce concernée et la commande d'au moins un dispositif (150) visant à satisfaire les critères pour l'effet souhaité associé à la salle concernée,
dans lequel une pièce est associée à une fonction et ladite fonction intelligente est personnalisée après ladite fonction de la pièce, dans lequel le procédé comprend la réception d'une entrée indiquant le type de pièce pendant une phase de paramétrage dudit appareil, dans lequel les types de pièce sont prédéfinis et l'entrée indiquant un type de pièce indique un des types de pièces prédéfinis.
